# EUROPEAN PATENT APPLICATION

(11) **EP 3 133 379 A1**
(43) Date of publication of application: **22.02.2017**
(21) Application number: 15780439.4
(22) Date of filing: 15.04.2015
(51) Int. Cl.: G01J 1/02

(54) **TERAHERTZ-WAVE DETECTOR**

(30) Priority: 18.04.2014 JP 2014086412
(71) Applicant: NEC Corporation, Tokyo 108-8001 (JP)
(72) Inventor: KURASHINA, Seiji, Tokyo 108-8001 (JP); MIYOSHI, Masaru, Tokyo 108-8001 (JP)
(74) Representative: Vossius & Partner Patentanwälte Rechtsanwälte mbB
(86) International application number: PCT/JP2015/002076
(87) International publication number: WO 2015/159540

(57) **Abstract**

A terahertz-wave detector having a thermal separation structure in which a temperature detection unit 14 including a bolometer thin film 7 connected to electrode wiring 9 is supported so as to be lifted above a substrate 2 by a support part 13 including the electrode wiring 9 connected to a reading circuit 2a formed on the substrate 2, wherein the terahertz-wave detector is provided with a reflective film 3 that is formed on the substrate 2 and reflects terahertz waves and an absorption film 11 that is formed on the temperature detection unit 14 and absorbs terahertz waves and the reflective film 3 is integrally formed with the reflective film of an adjacent terahertz-wave detector.

## Description

### Technical Field

The present invention relates to a detector which detects electromagnetic waves in the terahertz frequency band (terahertz waves) and particularly to a bolometer-type terahertz-wave detector.

### Background Art

In recent years, electromagnetic waves in the terahertz (THz) frequency band present between light and radio waves (specifically, electromagnetic waves having a frequency of 10¹² Hz and having a wavelength of about 30 µm to 1 mm. Hereinafter, the electromagnetic waves will be referred to as "THz waves") are attracting attention as electromagnetic waves that directly reflect information on a substance. As a technique for detecting the THz waves, there is a technique to which a technique of a bolometer-type infrared detector having a thermal separation structure is applied. As one of this kind of techniques, there is a bolometer-type THz-wave detector (hereinafter, also simply referred to as "THz-wave detector") (for example, see Patent Literatures (PTL) 1 to 4 and Non Patent Literature (NPL) 1.).

Fig. 14 is an explanatory diagram schematically illustrating a pixel structure of a two-dimensional bolometer-type THz-wave detector described in PTL 3. Fig. 14 illustrates a sectional view of the two-dimensional bolometer-type THz-wave detector.

Figs. 15, 16, and 17 are explanatory diagrams each schematically illustrating a pixel structure of the two-dimensional bolometer-type THz-wave detector described in PTL 4.

### Citation List

### Patent Literature

PTL 1: Japanese Patent Application Laid-Open No. 2008-241438
PTL 2: Japanese Patent Application Laid-Open No. 2011-106825
PTL 3: Japanese Patent Application Laid-Open No. 2012-002603
PTL 4: Japanese Patent Application Laid-Open No. 2012-194080

### Non Patent Literature

NPL 1: Oda et. al., Proceedings of SPIE, Vol. 6940, 2008, pp. 69402Y-1 to 69402Y-12

### Summary of Invention

### Technical Problem

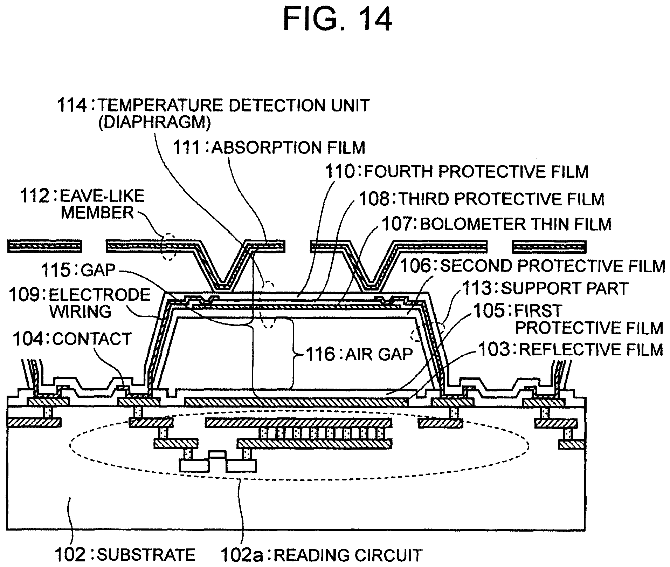

A THz-wave detector is preferably able to detect THz waves with higher-sensitivity. For example, the THz-wave detector described in PTL 3 detects THz waves with high sensitivity by using an interference between a reflective film 103 and an absorption film 111 as illustrated in Fig. 14.

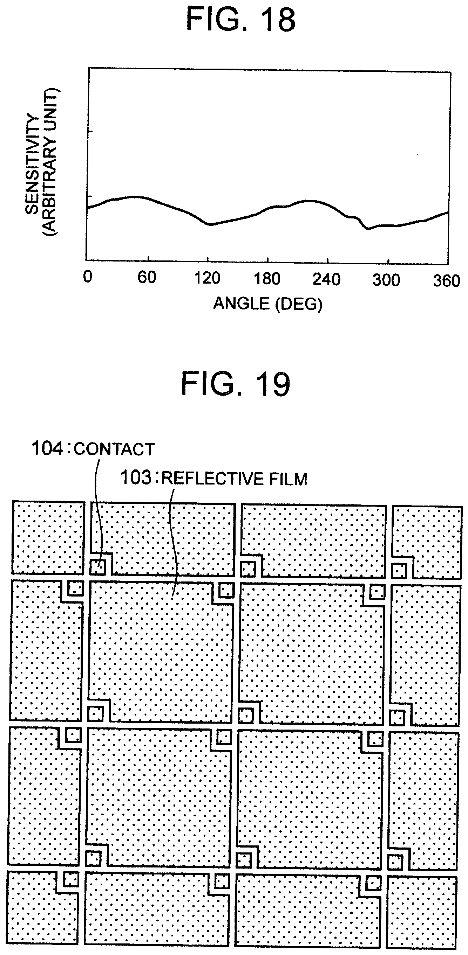

In the THz-wave detector as illustrated in Fig. 14, however, such a phenomenon that an output from the detector, in other words, THz sensor sensitivity (hereinafter, simply referred to as "sensor sensitivity") changes according to an angle between the polarization direction and the detector (polarization angle) is recognized when linear-polarized THz waves are incident on the detector. Specifically, in the THz-wave detector as illustrated in Fig. 14, the dependence of the sensor sensitivity on the polarization angle is recognized. Fig. 18 is a graph illustrating the dependence of the sensor sensitivity of the THz-wave detector as illustrated in Fig. 14 on the polarization angle.

To achieve a higher-sensitivity THz-wave detector, it is necessary to reduce the dependence of the sensor sensitivity on the polarization angle.

Fig. 19 is a top view of a reflective film 103 of arrayed pixels (the THz-wave detector illustrated in Fig. 14). Fig. 19 illustrates the top view looking down on the reflective film 103 for a plurality of arrayed pixels. As illustrated in Fig. 19, in the structure of the reflective film 103 illustrated in Fig. 14, a gap is formed between pixels in the reflective film 103. THz waves pass through the gap between the pixels in the reflective film 103 and a substrate 102 (specifically, the metal wiring of the reading circuit 102a of the substrate 102) reflects or absorbs the THz waves. Therefore, to study the THz reflection characteristics of the THz-wave detector, it is necessary to estimate the reflection/absorption in the metal wiring of the reading circuit 102a. It is, however, difficult to estimate the reflection/absorption in the metal wiring of the reading circuit 102a since the metal wiring of the reading circuit 102a normally includes a plurality of layers.

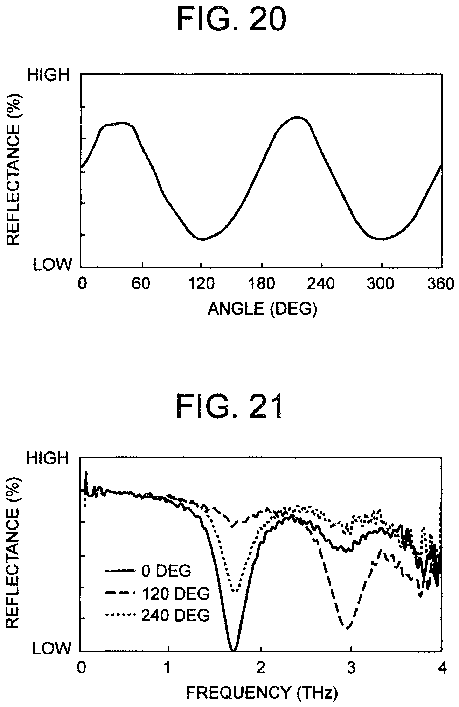

Fig. 20 illustrates the THz reflection characteristics of the THz-wave detector in which the structure on the upper side than the reflective film 103 is not formed. Fig. 20 is a graph illustrating the dependence of a reflectance on a polarization angle in the case where the structure on the upper side than the reflective film 103 of the THz-wave detector illustrated in Fig. 14 is not formed.

From the graph illustrated in Fig. 20, it is understood that the THz reflectance drastically changes according to the polarization angle. If the shape of the gap in the reflective film 103 is reflected on the THz reflection characteristics, the THz reflection characteristics in that case are supposed to show a four-fold symmetry in which a symmetry is repeated every 90 degrees. It, however, can be estimated that reflection/absorption occurs from the metal wiring of the reading circuit 102a which is located in a lower part than the reflective film 103 since the THz reflection characteristics illustrated in Fig. 20 show a two-fold symmetry. Specifically, reflection/absorption in the metal wiring of the reading circuit 102a can be estimated from the graph illustrated in Fig. 20.

It is then found that there is a correlation between the dependence of the sensor sensitivity on the polarization angle and the dependence of the THz reflectance of the substrate 102 on the polarization angle from the graphs illustrated in Figs. 18 and 20. Specifically, it is found that the sensor sensitivity of the THz-wave detector is low in the polarization angle at which the THz reflectance is low in the substrate 102.

Therefore, it is an object of the present invention to provide a higher-sensitivity bolometer-type terahertz-wave detector capable of reducing the dependence of the sensor sensitivity on the polarization angle.

### Solution to Problem

According to the present invention, there is provided a terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, wherein the terahertz-wave detector is provided with a reflective film that is formed on the substrate and reflects terahertz waves and an absorption film that is formed on the temperature detection unit and absorbs terahertz waves and the reflective film is integrally formed with the reflective film of an adjacent terahertz-wave detector.

According to the present invention, there is provided a terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, wherein the terahertz-wave detector is provided with a second reflective film formed so as to cover a reflective film on the upper side of the reflective film that is formed on the substrate and reflects terahertz waves and an absorption film that is formed on the temperature detection unit and absorbs terahertz waves and the second reflective film is integrally formed with the second reflective film of an adjacent terahertz-wave detector.

According to the present invention, there is provided a terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, wherein the terahertz-wave detector is provided with a reflective film that is formed on the substrate and reflects terahertz waves and an absorption film that is formed on the temperature detection unit and absorbs terahertz waves and the reflective film is formed without any space from the reflective film of an adjacent terahertz-wave detector.

According to the present invention, there is provided a terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, wherein the terahertz-wave detector is provided with a reflective film that is formed on the substrate and reflects terahertz waves and an absorption film that is formed on the temperature detection unit and absorbs terahertz waves and the reflective film is formed so that the dependence on the polarization angle is smaller than a predetermined value.

### Advantageous Effects of Invention

The present invention is able to reduce the dependence of the sensor sensitivity of the bolometer-type THz-wave detector on the polarization angle and to achieve higher-sensitivity THz wave detection.

### Brief Description of Drawings

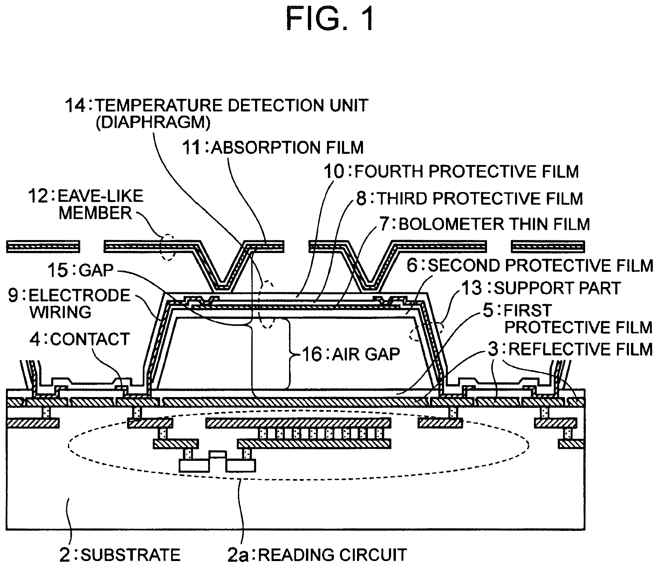

[Fig. 1] Fig. 1 is an explanatory diagram schematically illustrating a pixel structure according to a first exemplary embodiment of a THz-wave detector according to the present invention.

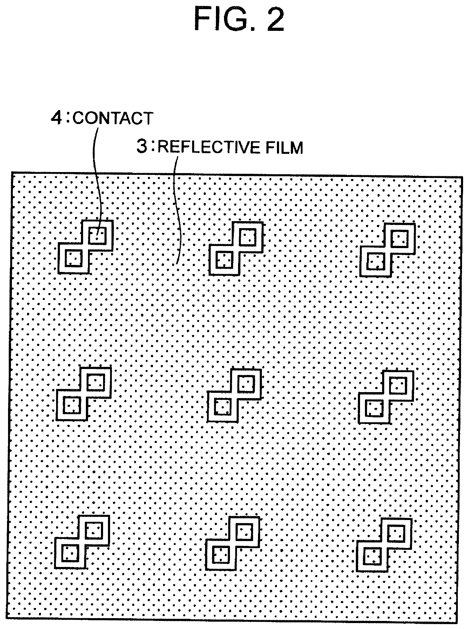

[Fig. 2] Fig. 2 is a top view of a reflective film illustrated in Fig. 1.

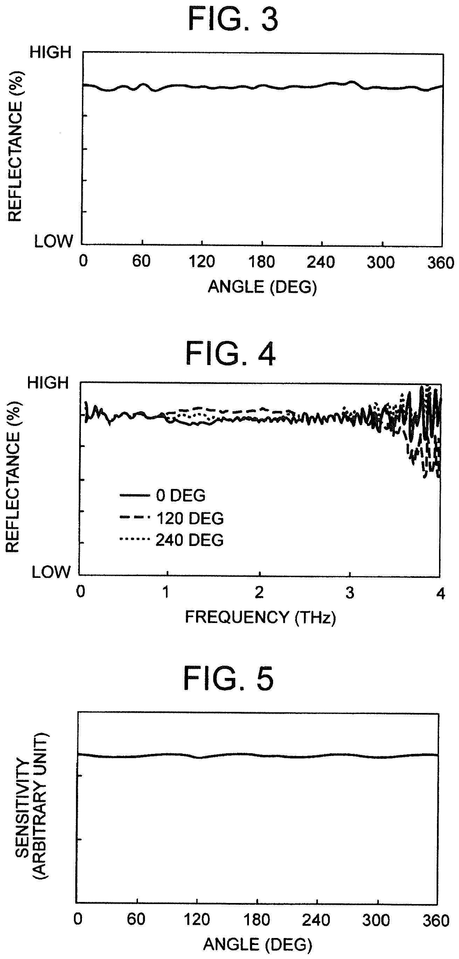

[Fig. 3] Fig. 3 is a graph illustrating the dependence of a reflectance of a THz-wave detector illustrated in Fig. 1 on a polarization angle in the case where the structure on the upper side than the reflective film is not formed.
[Fig. 4] Fig. 4 is a graph illustrating the dependence of a reflectance of the THz-wave detector illustrated in Fig. 1 on a frequency in the case where the structure on the upper side than the reflective film is not formed.
[Fig. 5] Fig. 5 is a graph illustrating the dependence of sensor sensitivity of the THz-wave detector illustrated in Fig. 1 on the polarization angle.

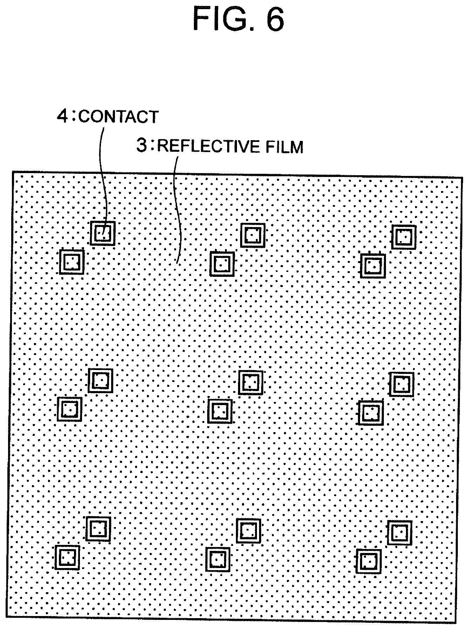

[Fig. 6] Fig. 6 is a top view of an entire reflective film in the case where the reflective film is arranged between a contact and another contact.

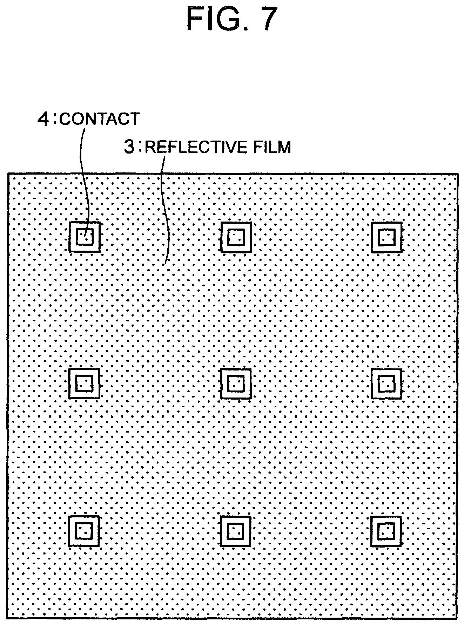

[Fig. 7] Fig. 7 is a top view of a reflective film in the case where a contact is electrically connected to a contact of another pixel.

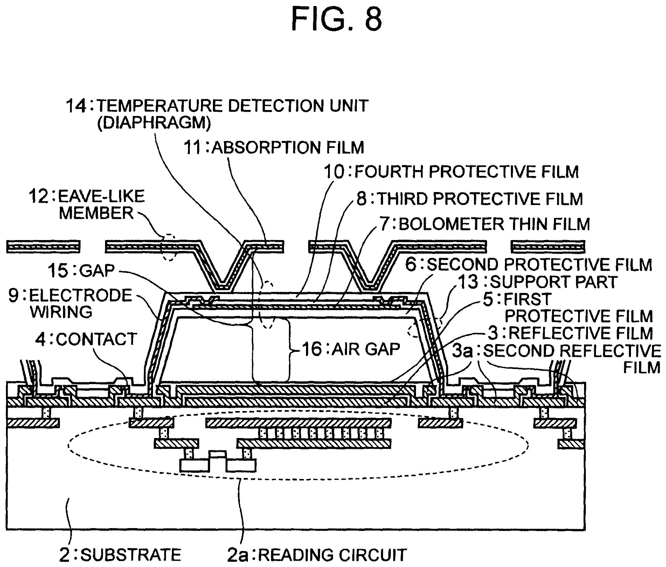

[Fig. 8] Fig. 8 is an explanatory diagram schematically illustrating a pixel structure of a second exemplary embodiment of the THz-wave detector according to the present invention.

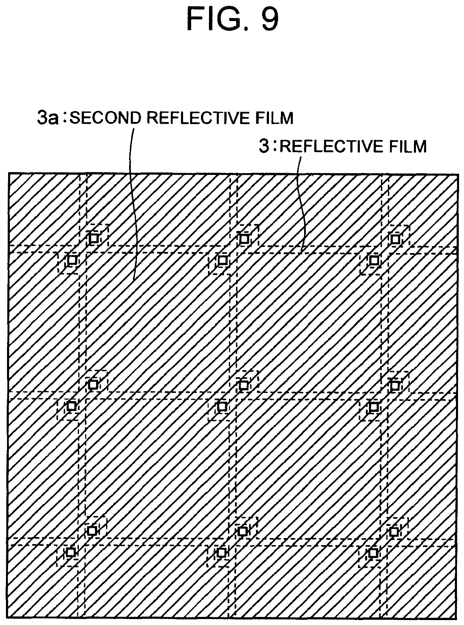

[Fig. 9] Fig. 9 is a top view of a second reflective film illustrated in Fig. 8.

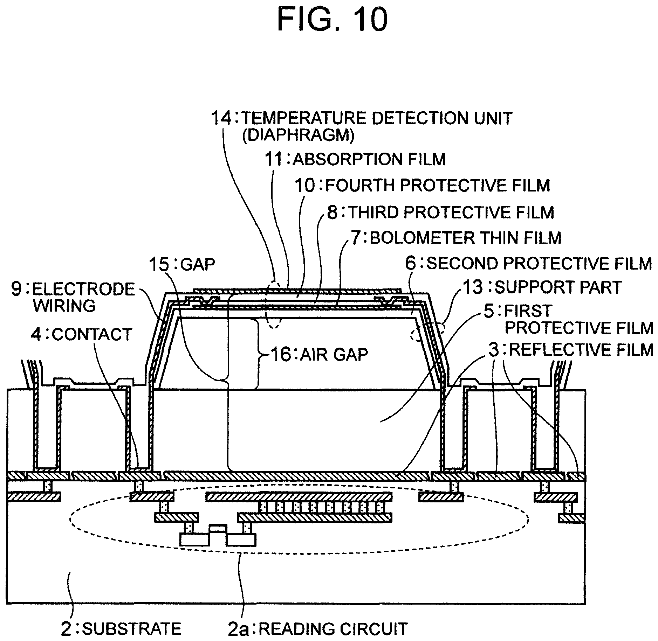

[Fig. 10] Fig. 10 is an explanatory diagram schematically illustrating a pixel structure of a third exemplary embodiment of the THz-wave detector according to the present invention.

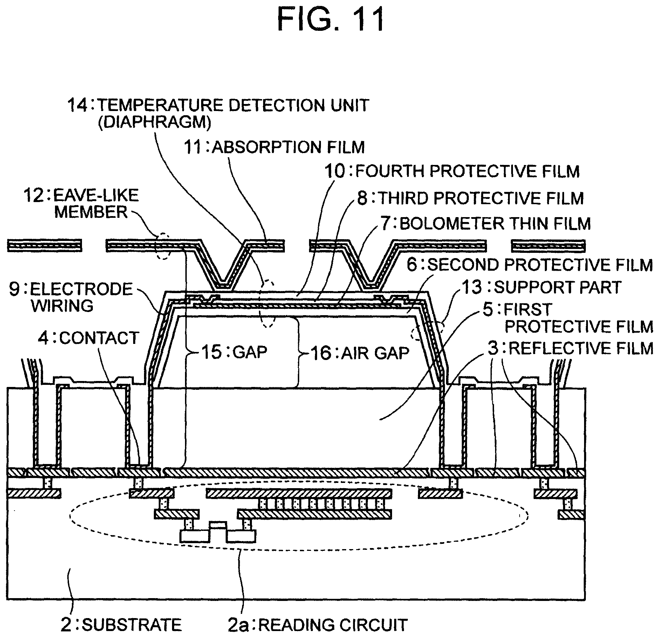

[Fig. 11] Fig. 11 is an explanatory diagram schematically illustrating a pixel structure of a fourth exemplary embodiment of the THz-wave detector according to the present invention.

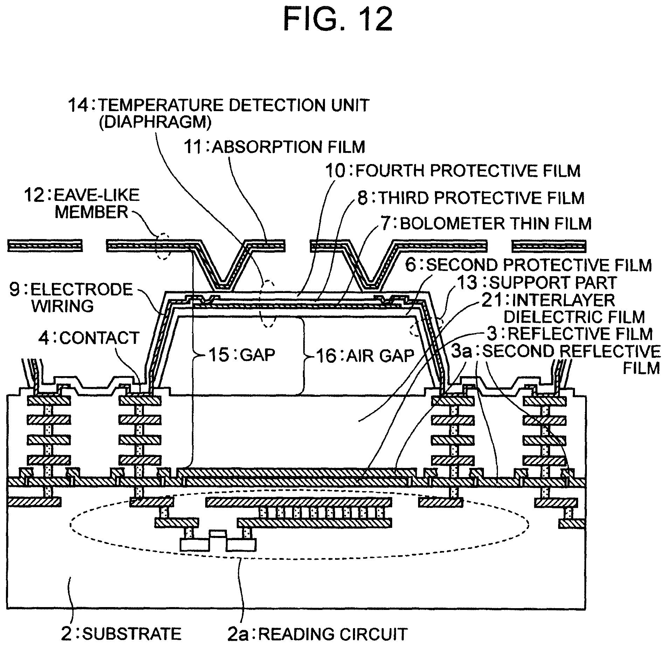

[Fig. 12] Fig. 12 is an explanatory diagram schematically illustrating a pixel structure of a fifth exemplary embodiment of the THz-wave detector according to the present invention.

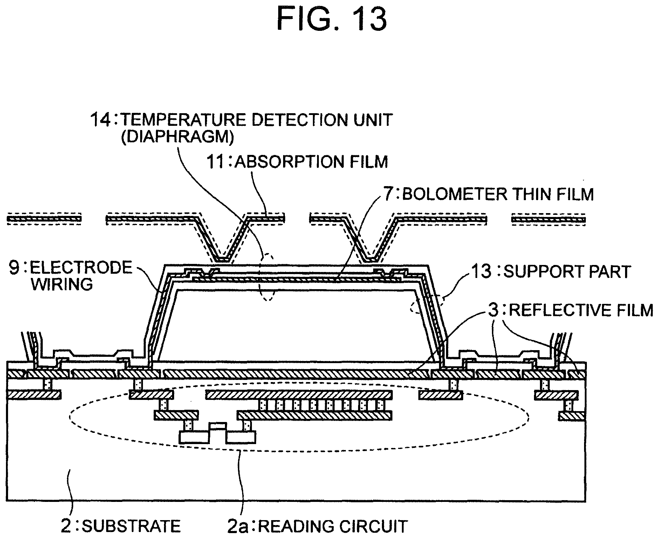

[Fig. 13] Fig. 13 is an explanatory diagram illustrating the minimum configuration of the terahertz-wave detector according to the present invention.
[Fig. 14] Fig. 14 is an explanatory diagram schematically illustrating a pixel structure of a two-dimensional bolometer-type THz-wave detector described in PTL 3.

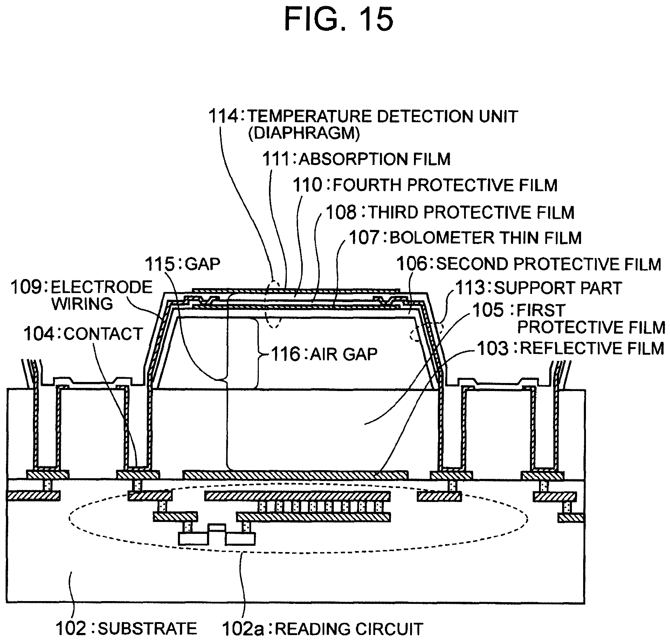

[Fig. 15] Fig. 15 is an explanatory diagram schematically illustrating a pixel structure of a two-dimensional bolometer-type THz-wave detector described in PTL 4.

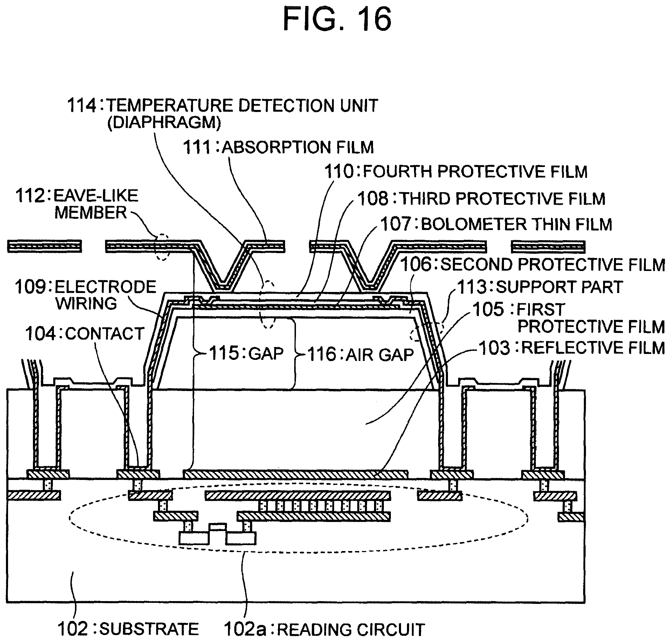

[Fig. 16] Fig. 16 is an explanatory diagram schematically illustrating a pixel structure of the two-dimensional bolometer-type THz-wave detector described in PTL 4.

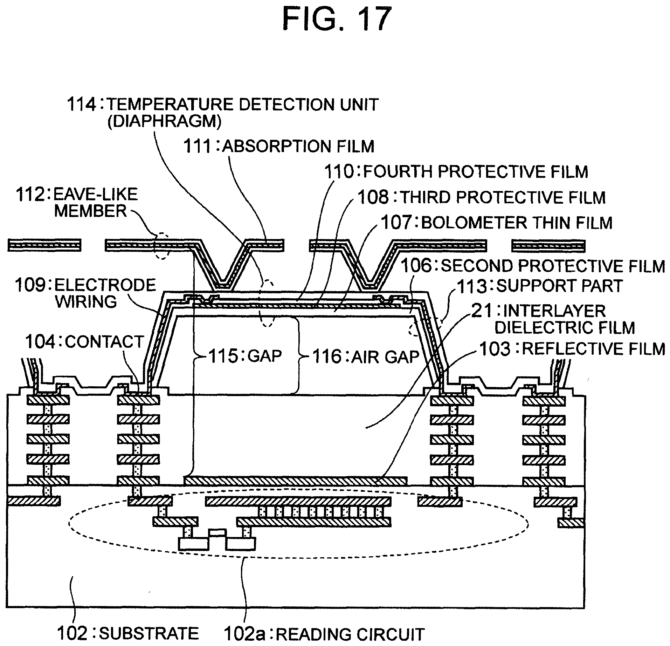

[Fig. 17] Fig. 17 is an explanatory diagram schematically illustrating a pixel structure of the two-dimensional bolometer-type THz-wave detector described in PTL 4.
[Fig. 18] Fig. 18 is a graph illustrating the dependence of sensor sensitivity of the THz-wave detector illustrated in Fig. 14 on a polarization angle.
[Fig. 19] Fig. 19 is a top view of a reflective film of arrayed pixels (the THz-wave detector illustrated in Fig. 14).
[Fig. 20] Fig. 20 is a graph illustrating the dependence of a reflectance of the THz-wave detector illustrated in Fig. 14 on the polarization angle in the case where the structure on the upper side than the reflective film is not formed.
[Fig. 21] Fig. 21 is a graph illustrating the dependence of the reflectance of the THz-wave detector illustrated in Fig. 14 on the frequency in the case where the structure on the upper side than the reflective film is not formed.

### Description of Embodiment

### Exemplary Embodiment 1

Hereinafter, a first exemplary embodiment of the present invention will be described with reference to drawings.

Fig. 1 is an explanatory diagram schematically illustrating a pixel structure according to a first exemplary embodiment of a THz-wave detector according to the present invention. In Fig. 1, a sectional view of the THz-wave detector is illustrated.

As illustrated in Fig. 1, the THz-wave detector includes a reading circuit 2a, a substrate 2, a reflective film 3, a contact 4, a first protective film 5, electrode wiring 9, an eave-like member 12, a support part 13, and a temperature detection unit (diaphragm) 14.

The substrate 2, the reading circuit 2a, the reflective film 3, the contact 4, the first protective film 5, the electrode wiring 9, the eave-like member 12, the support part 13, and the temperature detection unit 14 are the same as a substrate 102, a reading circuit 102a, a reflective film 103, a contact 104, a first protective film 105, electrode wiring 109, an eave-like member 112, a support part 113, and a temperature detection unit 114, and therefore the description thereof is omitted here.

Moreover, a second protective film 6, a third protective film 8, and a fourth protective film 10 included by the support part 13 are the same as a second protective film 106, a third protective film 108, and a fourth protective film 110 included by the support part 113 illustrated in Fig. 14, and therefore the description thereof is omitted here. Furthermore, a bolometer thin film 7 and an absorption film 11 included by the temperature detection unit 14 are the same as a bolometer thin film 107 and an absorption film 111 included by the temperature detection unit 114 illustrated in Fig. 14, and therefore the description thereof is omitted here.

In this exemplary embodiment, as illustrated in Fig. 1, the reflective film 3 is formed so as to be integrated with an adjacent reflective film to prevent a gap from being formed between pixels adjacent to each other in the reflective film 3. Fig. 2 is a top view of the reflective film 3 illustrated in Fig. 1. Fig. 2 illustrates a top view looking down on the reflective film 3 for a plurality of arrayed pixels. In this manner, the reflective film 3 is arranged without a gap to prevent THz waves from passing through the gap so as to inhibit an occurrence of reflection or absorption from or into the metal wiring of the reading circuit 2a in this exemplary embodiment. This enables a reduction in the dependence of the THz reflectance of the substrate 2 on the polarization angle. Although the reflective film is integrally formed in this exemplary embodiment, the reflective film does not always need to be integrally formed, but the reflective film 3 may be formed separately as long as the gap is not formed.

The following describes THz reflection characteristics of the THz-wave detector according to the present invention.

For facilitating the description of the advantageous effects of the present invention, the reflective film 3 is formed as illustrated in Fig. 1 and Figs. 3 and 4 illustrate the THz reflection characteristics of the THz-wave detector in which the structure on the upper side than the reflective film 3 is not formed. Fig. 3 is a graph illustrating the dependence of a reflectance of the THz-wave detector illustrated in Fig. 1 on a polarization angle in the case where the structure on the upper side than the reflective film 3 is not formed.

In the graph illustrated in Fig. 3, any dependence of the THz reflectance on the polarization angle as in the graph illustrated in Fig. 20 is not found.

Furthermore, Fig. 5 illustrates the dependence of the sensor sensitivity of the THz-wave detector of this exemplary embodiment on the polarization angle. In the graph illustrated in Fig. 5, any dependence of the sensor sensitivity on the polarization angle as in Fig. 18 is not found, and thus an advantageous effect of the present invention is obvious.

Fig. 4 is a graph illustrating the dependence of a reflectance of the THz-wave detector illustrated in Fig. 1 on a frequency in the case where the structure on the upper side than the reflective film 3 is not formed. Fig. 4 illustrates the dependence of the THz reflectance on the frequency at the polarization angles of 0, 120, and 240 degrees. Fig. 21 is a graph illustrating the dependence of the reflectance of the THz-wave detector illustrated in Fig. 14 on the frequency in the case where the structure on the upper side than the reflective film 3 is not formed. In the graph illustrated in Fig. 4, any large fluctuation of the THz reflectance caused by the frequency and the polarization angle as illustrated in Fig. 21 is not found. In other words, the THz-wave detector of this exemplary embodiment is able to reduce the variation of the dependence of the THz reflectance on the polarization angle caused by frequency and is able to maintain the dependence of the sensor sensitivity on the polarization angle to be low even if the frequency changes.

Incidentally, it is found by the study of the present inventor that the advantageous effect of the present invention is more obvious in the case where the sheet resistance of the reflective film 3 is 100 Ω/sq or less.

As described hereinabove, the reflective film 3 is formed to prevent a gap from being formed between pixels in the reflective film 3 in the exemplary embodiment. This prevents THz waves from passing through the gap in the reflective film 3, thereby enabling a reduction in the dependence of the THz reflectance of the substrate 2 on the polarization angle. This makes it more difficult for such a phenomenon that an output (sensor sensitivity) from the THz-wave detector changes according to the polarization angle to occur. Specifically, the present invention is able to reduce the dependence of the sensor sensitivity on the polarization angle in the THz-wave detector for detecting THz waves by using an interference between the reflective film and the absorption film as illustrated in Fig. 14.

If the area of the contact 4 illustrated in Fig. 2 is not so large, the reflective film 3 may be arranged between the contact 4 and a contact of another pixel. In that case, the reflective film 3 is formed as illustrated in Fig. 6. Fig. 6 is a top view of the entire reflective film 3 in the case where the reflective film 3 is arranged between the contact 4 and a contact of another pixel. Fig. 6 illustrates the top view looking down on the reflective film 3 for a plurality of arrayed pixels. The formation of the reflective film 3 as in Fig. 6 enables the area of the reflective film 3 to increase as far as possible, thereby enabling a further reduction in the dependence of the sensor sensitivity of the THz-wave detector on the polarization angle.

Moreover, one of the contacts 4 of the THz-wave detector may be electrically connected to a contact 4 of another THz-wave detector. In that case, as illustrated in Fig. 7, the gap between the reflective film 3 and the contact 4 (a hole for the contact 4 formed in the reflective film 3), which is provided in the reflective film 3, can be reduced. Thereby, the area of the reflective film 3 is able to be increased as far as possible, thereby enabling the dependence of the sensor sensitivity of the THz-wave detector on the polarization angle to be further reduced. Fig. 7 is a top view of the reflective film 3 in the case where the contact 4 is electrically connected to a contact of another pixel. Fig. 7 illustrates a top view looking down on the reflective film 3 for a plurality of arrayed pixels.

### Exemplary Embodiment 2

Hereinafter, a second exemplary embodiment will be described with reference to drawings.

Fig. 8 is an explanatory diagram schematically illustrating a pixel structure of the second exemplary embodiment of the THz-wave detector according to the present invention. Fig. 8 illustrates a sectional view of the THz-wave detector.

The pixel structure of the second exemplary embodiment is the same as the pixel structure of the first exemplary embodiment. As illustrated in Fig. 8, however, the THz-wave detector in this exemplary embodiment includes a second reflective film 3a in addition to the constituent elements illustrated in Fig. 1. Fig. 9 is a top view of the second reflective film 3a illustrated in Fig. 8. Fig. 9 illustrates a top view looking down on the second reflective film 3a for a plurality of arrayed pixels.

In this exemplary embodiment, the second reflective film 3a is formed so as to cover the reflective film 3 as illustrated in Figs. 8 and 9. The reflective film 3 and the second reflective film 3a are physically separated from each other. In addition, the second reflective film 3a and the absorption film 11 form an optical resonance structure.

This exemplary embodiment is effective in the case where the reflective film 3 cannot be connected to a reflective film of an adjacent pixel according to convenience for manufacturing the THz sensor. For example, in the case where a voltage is applied to the reflective film 3, short-circuiting is likely to occur when the reflective film 3 is connected to a reflective film of an adjacent pixel. In that case, the second reflective film 3a physically separated from the reflective film 3 is formed so as to cover the reflective film 3, thereby achieving an equivalent advantageous effect to the first exemplary embodiment.

Furthermore, similarly to the first exemplary embodiment, it is found by the study of the present inventor that the advantageous effect of the present invention is more obvious if the sheet resistance of the second reflective film 3a is 100 Ω/sq or less.

### Exemplary Embodiment 3

Hereinafter, a third exemplary embodiment of the present invention will be described with reference to drawings.

Fig. 10 is an explanatory diagram schematically illustrating a pixel structure of the third exemplary embodiment of the THz-wave detector according to the present invention. Fig. 10 illustrates a sectional view of the THz-wave detector.

The pixel structure of the third exemplary embodiment is the same as the pixel structure of the first exemplary embodiment.

In this exemplary embodiment, however, the THz-wave detector does not include the eave-like member 12. Moreover, in this exemplary embodiment, the film thickness of the first protective film 5 is set so that a gap (air gap 16) between the upper surface of the first protective film 5 and the lower surface of the temperature detection unit 14 is less than 8 µm without a change in the gap (gap 15) between the reflective film 3 and the absorption film 11.

Specifically, this exemplary embodiment is obtained by applying the reflective film 3 of the first exemplary embodiment to the THz-wave detector illustrated in Fig. 15. In this manner, the present invention may be applied to the THz-wave detector illustrated in Fig. 15. Thereby, an equivalent advantageous effect to the first exemplary embodiment is achieved also in the THz-wave detector as illustrated in Fig. 15.

In addition, the second reflective film 3a of the second exemplary embodiment may be applied to the THz-wave detector illustrated in Fig. 15. Thereby, in the THz-wave detector as illustrated in Fig. 15, an equivalent advantageous effect to the first exemplary embodiment is achieved even if the reflective film 3 cannot be connected to a reflective film of an adjacent pixel according to convenience for manufacturing the THz sensor.

### Exemplary Embodiment 4

Hereinafter, a fourth exemplary embodiment of the present invention will be described with reference to drawings.

Fig. 11 is an explanatory diagram schematically illustrating a pixel structure of the fourth exemplary embodiment of the THz-wave detector according to the present invention. Fig. 11 illustrates a sectional view of the THz-wave detector.

The pixel structure of the fourth exemplary embodiment is the same as the pixel structure of the third exemplary embodiment. In this exemplary embodiment, however, the eave-like member 12 is formed over the temperature detection unit 14.

Specifically, this exemplary embodiment is obtained by applying the reflective film 3 of the first exemplary embodiment to the THz-wave detector illustrated in Fig. 16. In this manner, the present invention may be applied to the THz-wave detector illustrated in Fig. 16. Thereby, an equivalent advantageous effect to the first exemplary embodiment is achieved also in the THz-wave detector as illustrated in Fig. 16.

In addition, the second reflective film 3a of the second exemplary embodiment may be applied to the THz-wave detector illustrated in Fig. 16. Thereby, in the THz-wave detector as illustrated in Fig. 16, an equivalent advantageous effect to the first exemplary embodiment is achieved even if the reflective film 3 cannot be connected to a reflective film of an adjacent pixel according to convenience for manufacturing the THz sensor.

### Exemplary Embodiment 5

Hereinafter, a fifth exemplary embodiment of the present invention will be described with reference to drawings.

Fig. 12 is an explanatory diagram schematically illustrating a pixel structure of the fifth exemplary embodiment of the THz-wave detector according to the present invention. Fig. 12 illustrates a sectional view of the THz-wave detector.

The pixel structure of the fifth exemplary embodiment is the same as the pixel structure of the second exemplary embodiment.

In this exemplary embodiment, however, a multilayer wiring structure for connecting the electrode wiring 9 to the reading circuit 2a is formed by sequentially laminating a via and a wiring layer on the wiring used as the reflective film 3 by using a wiring forming method in a semiconductor manufacturing process. Thereby, breakage of the electrode wiring 9 can be suppressed. The interlayer dielectric film 21 is a dielectric film between laminated wiring layers.

Specifically, this exemplary embodiment is obtained by applying the second reflective film 3a of the second exemplary embodiment to the THz-wave detector illustrated in Fig. 17. In this manner, the present invention may be applied to the THz-wave detector illustrated in Fig. 17. Thereby, an equivalent advantageous effect to the first exemplary embodiment is achieved even if the reflective film 3 is not able to be connected to the reflective film of an adjacent pixel according to convenience for manufacturing the THz sensor in the THz-wave detector as illustrated in Fig. 17.

Incidentally, the reflective film 3 of the first exemplary embodiment may be applied to the THz-wave detector illustrated in Fig. 17. Specifically, the THz-wave detector illustrated in Fig. 17 may include the reflective film 3 instead of the reflective film 103. Also in that exemplary embodiment, an equivalent advantageous effect to the first exemplary embodiment is achieved.

Subsequently, the outline of the present invention will be described. Fig. 13 is an explanatory diagram illustrating the minimum configuration of the terahertz-wave detector according to the present invention. The terahertz-wave detector according to the present invention is a terahertz-wave detector having a thermal separation structure in which a temperature detection unit 14 including a bolometer thin film 7 connected to electrode wiring 9 is supported so as to be lifted above a substrate 2 by a support part 13 including the electrode wiring 9 connected to a reading circuit 2a formed on the substrate 2, wherein the terahertz-wave detector is provided with a reflective film 3 that is formed on the substrate 2 and reflects terahertz waves and an absorption film 11 that is formed on the temperature detection unit 14 and absorbs terahertz waves and the reflective film 3 is integrally formed with the reflective film of an adjacent terahertz-wave detector.

According to the above configuration, the present invention is able to prevent THz waves from passing through a gap in the reflective film 3 and to reduce the dependence of the THz reflectance of the substrate 2 on the polarization angle. This makes it more difficult for such a phenomenon that an output (sensor sensitivity) from the detector changes according to the polarization angle to occur. Specifically, the present invention is able to reduce the dependence of the sensor sensitivity on the polarization angle in the THz-wave detector for detecting THz waves by using an interference between the reflective film and the absorption film as illustrated in Fig. 14.

Moreover, the sheet resistance of the reflective film 3 may be 100 Ω/sq or less. This configuration enables the dependence of the sensor sensitivity of the THz-wave detector on the polarization angle to be further reduced.

Furthermore, a hole for a contact 4 may be formed in the reflective film 3 according to the area of the contact 4 electrically connecting the reading circuit 2a formed on the substrate 2 to the electrode wiring 9 included by the support part 13. This configuration enables the area of the reflective film 3 to be increased as far as possible and thus enables the dependence of the sensor sensitivity of the THz-wave detector on the polarization angle to be further reduced.

Moreover, the terahertz-wave detector according to the present invention is a terahertz-wave detector having a thermal separation structure in which a temperature detection unit 14 including a bolometer thin film 7 connected to electrode wiring 9 is supported so as to be lifted above a substrate 2 by a support part 13 including the electrode wiring 9 connected to a reading circuit 2a formed on the substrate 2, wherein the terahertz-wave detector is provided with a second reflective film 3a formed so as to cover a reflective film 3 on the upper side of the reflective film 3 that is formed on the substrate 2 and reflects terahertz waves and an absorption film 11 that is formed on the temperature detection unit 14 and absorbs terahertz waves and the second reflective film 3a is integrally formed with the second reflective film of an adjacent terahertz-wave detector.

If the second reflective film 3a that covers the reflective film 3 is integrally formed with the second reflective film of the adjacent pixel instead of integrally forming the reflective film 3 with the reflective film of the adjacent pixel in this manner, the dependence of the sensor sensitivity of the THz-wave detector on the polarization angle can be reduced even in the case where the reflective film 3 cannot be connected to the reflective film of the adjacent pixel according to convenience for manufacturing the THz sensor.

Moreover, the reflective film 3 and the second reflective film 3a may be separated from each other. For example, in the case where a voltage is applied to the reflective film 3, short-circuiting is likely to occur when the reflective film 3 is connected to the reflective film of the adjacent pixel. In that case, according to the aforementioned configuration, the reflective film 3 and the second reflective film 3a are physically separated from each other, thereby enabling a reduction in the dependence of the sensor sensitivity of the THz-wave detector on the polarization angle.

Furthermore, the sheet resistance of the second reflective film 3a may be 100 Ω/sq or less. This configuration enables the dependence of the sensor sensitivity of the THz-wave detector on the polarization angle to be further reduced.

Furthermore, the terahertz-wave detector according to the present invention is a terahertz-wave detector having a thermal separation structure in which a temperature detection unit 14 including a bolometer thin film 7 connected to electrode wiring 9 is supported so as to be lifted above a substrate 2 by a support part 13 including the electrode wiring 9 connected to a reading circuit 2a formed on the substrate 2, wherein the terahertz-wave detector is provided with a reflective film 3 that is formed on the substrate 2 and reflects terahertz waves and an absorption film 11 that is formed on the temperature detection unit 14 and absorbs terahertz waves and the reflective film 3 is formed without any space from the reflective film of an adjacent terahertz-wave detector.

According to the configuration, THz waves can be prevented from passing through the gap in the reflective film 3 even in the case where the reflective film is separated from the reflective film of the adjacent terahertz-wave detector and not integrally formed with the reflective film thereof. This enables a reduction in the dependence of the THz reflectance of the substrate 2 on the polarization angle.

Moreover, the terahertz-wave detector according to the present invention is a terahertz-wave detector having a thermal separation structure in which a temperature detection unit 14 including a bolometer thin film 7 connected to electrode wiring 9 is supported so as to be lifted above a substrate 2 by a support part 13 including the electrode wiring 9 connected to a reading circuit 2a formed on the substrate 2, wherein the terahertz-wave detector is provided with a reflective film 3 that is formed on the substrate 2 and reflects terahertz waves and an absorption film 11 that is formed on the temperature detection unit 14 and absorbs terahertz waves and the reflective film 3 is formed so that the dependence of the terahertz-wave reflectance on the polarization angle is smaller than a predetermined value.

This configuration makes it more difficult for such a phenomenon that an output (sensor sensitivity) from the THz-wave detector changes according to the polarization angle to occur.

Although the present invention has been described with reference to the exemplary embodiments and examples hereinabove, the present invention is not limited thereto. A variety of changes, which can be understood by those skilled in the art, may be made in the configuration and details of the present invention within the scope thereof.

This application claims priority to Japanese Patent Application No. 2014-086412 filed on April 18, 2014, and the entire disclosure thereof is hereby incorporated herein by reference.

### Reference Signs List

- 2, 102: Substrate
- 2a, 102a: Reading circuit
- 3, 103: Reflective film
- 3a: Second reflective film
- 4, 104: Contact
- 5, 105: First protective film
- 6, 106: Second protective film
- 7, 107: Bolometer thin film
- 8, 108: Third protective film
- 9, 109: Electrode wiring
- 10, 110: Fourth protective film
- 11, 111: Absorption film
- 12, 112: Eave-like member
- 13, 113: Support part
- 14, 114: Temperature detection unit (diaphragm)
- 15, 115: Gap
- 16, 116: Air gap

## Claims

1. A terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, the terahertz-wave detector comprising:
a reflective film that is formed on the substrate and reflects terahertz waves; and
an absorption film that is formed on the temperature detection unit and absorbs terahertz waves,
wherein the reflective film is integrally formed with a reflective film of an adjacent terahertz-wave detector.

2. The terahertz-wave detector according to claim 1, wherein a sheet resistance of the reflective film is 100 Ω/sq or less.

3. The terahertz-wave detector according to claim 1 or 2, wherein a hole for a contact may be formed in the reflective film according to the area of the contact electrically connecting the reading circuit formed on the substrate to the electrode wiring included by the support part.

4. A terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, the terahertz-wave detector comprising:
a second reflective film formed so as to cover a reflective film on the upper side of the reflective film that is formed on the substrate and reflects terahertz waves; and
an absorption film that is formed on the temperature detection unit and absorbs terahertz waves,
wherein the second reflective film is integrally formed with a second reflective film of an adjacent terahertz-wave detector.

5. The terahertz-wave detector according to claim 4, wherein the reflective film and the second reflective film are separated from each other.

6. The terahertz-wave detector according to claim 4 or 5, wherein the sheet resistance of the second reflective film is 100 Ω/sq or less.

7. A terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, the terahertz-wave detector comprising:
a reflective film that is formed on the substrate and reflects terahertz waves; and
an absorption film that is formed on the temperature detection unit and absorbs terahertz waves,
wherein the reflective film is formed without any space from a reflective film of an adjacent terahertz-wave detector.

8. A terahertz-wave detector having a thermal separation structure in which a temperature detection unit including a bolometer thin film connected to electrode wiring is supported so as to be lifted above a substrate by a support part including the electrode wiring connected to a reading circuit formed on the substrate, the terahertz-wave detector comprising:
a reflective film that is formed on the substrate and reflects terahertz waves; and
an absorption film that is formed on the temperature detection unit and absorbs terahertz waves,
wherein the reflective film is formed so that the dependence of the terahertz-wave reflectance on the polarization angle is smaller than a predetermined value.
